# EUROPEAN PATENT APPLICATION

(11) **EP 4 194 275 A1**
(43) Date of publication of application: **14.06.2023**
(21) Application number: 22213001.5
(22) Date of filing: 13.12.2022
(51) Int. Cl.: B60R 11/04, G01S 7/481, G02B 1/18, G02B 27/00, G03B 17/02, H04N 23/51

(54) **CAMERA HOUSING DESIGN WITH ANTI GHOSTING PROPERTIES FOR USE WITH AN AUTONOMOUS VEHICLE**

(30) Priority: 13.12.2021 US 202163265334 P
(71) Applicant: Tusimple, Inc., San Diego, CA 92122 (US)
(72) Inventor: Skinner, Todd, San Diego, CA 92122 (US); Han, Xiaoling, San Diego, CA92122 (US); Wang, Lei, San Diego, CA 92122 (US); Nie, Lei, San Diego, CA 92122 (US)
(74) Representative: Morrall, Jonathan Ian McLachlan

(57) **Abstract**

A system includes a camera housing and a control device associated with an autonomous vehicle. The camera housing houses a camera, and is mounted to an autonomous vehicle. The camera housing comprises a glass positioned in front of the camera. The glass is coated with a set of materials comprising a hydrophobic material and an anti-reflective material. The set of materials is configured to reduce ghosting effect on an image captured by the camera. The camera housing further comprises a top portion and a bottom portion. The top portion extends beyond the bottom portion to form a tilt angle. The tilt angle is configured to reduce indirect light from coming into a field of view of the camera. The processor facilitates autonomous driving of the autonomous vehicle using at least the image. The ghosting effect is reduced in the image due to using the set of materials.

## Description

### TECHNICAL FIELD

The present disclosure relates generally to autonomous vehicles. More particularly, the present disclosure is related to a camera housing design with anti-ghosting properties for use with an autonomous vehicle.

### BACKGROUND

One aim of autonomous vehicle technologies is to provide vehicles that can safely navigate towards a destination. Cameras of an autonomous vehicle may capture images of a road traveled by the autonomous vehicle. The autonomous vehicle may use the images of the road to detect objects on the road and to determine a safe obstacle-free pathway to travel. However, the captured images may suffer from ghosting effects which adversely affect the operation of the autonomous vehicle.

### SUMMARY

This disclosure recognizes various problems and previously unmet needs related to implementing safe navigation for an autonomous vehicle in situations where a ghosting effect appears in images captured by cameras of the autonomous vehicle. Certain embodiments of the present disclosure provide unique technical solutions to technical problems of current autonomous vehicle technologies, including reducing the ghosting effect in images captured by cameras of the autonomous vehicle. The ghosting effect in an image may correspond to a replica of a light source in the image that is offset in position with respect to the light source in the image.

The present disclosure contemplates systems for reducing the ghosting effect in images captured by cameras of the autonomous vehicle. The disclosed system may include a camera housing configured to house a camera of the autonomous vehicle. The camera housing may include glass positioned in front of the camera and that is tilted from top to bottom such that a top portion of the camera housing extends beyond a bottom portion of the camera housing to form a tilt angle for the glass. This configuration may create an extending portion over the camera. The extending portion and the tilt angle may reduce indirect light from coming into a field of view of the camera.

The camera housing may comprise a glass that is positioned in front of the camera. The glass may be coated with a set of materials comprising a hydrophobic coating material and an anti-reflective coating material. The hydrophobic coating material may reduce the accumulation of liquid droplets on the surface of the glass. The anti-reflective material may reduce the amount of light that is reflected into the lens of the camera. Any suitable number and combination of the tilt angle of the glass positioned in the camera housing, the hydrophobic coating material placed on the glass, and the anti-reflective material placed on the glass reduce the ghosting effects associated with images captured by the camera.

In this manner, the camera housing may be configured to reduce the effect of direct and indirect light (e.g., ghosting effect) in the images captured by the camera. Accordingly, the disclosed system may be integrated into a practical application of improving an autonomous vehicle's perception of a road traveled by the autonomous vehicle. This, in turn, improves the object detection process from the images. For example, by reducing the ghosting effect in images, light-induced noises produced by the ghosting effect may be reduced in the images. Thus, the object detection module of the autonomous vehicle may receive more accurate images of the road and detect objects on and around the road more accurately. Thus, the disclosed system can determine a safer traveling pathway for the autonomous vehicle. The disclosed system may further be integrated into an additional practical application of improving the autonomous navigation of autonomous vehicles. Thus, the autonomous vehicle can travel more safely, and cars surrounding the autonomous vehicle can also travel more safely.

In one embodiment, a system may comprise a camera housing configured to house a camera. The camera housing may be mounted to an autonomous vehicle. The camera housing may comprise a glass positioned in front of the camera. The glass may be coated with a set of materials comprising a hydrophobic material and an anti-reflective material. The camera housing may further comprise a top portion and a bottom portion. The glass may be coupled to the top portion and the bottom portion. The top portion extends beyond the bottom portion to form a tilt angle. In this embodiment, any suitable number and combination of the tilt angle and set of materials coating the glass reduce the ghosting effect on an image captured by the camera. The system may further comprise a control device associated with the autonomous vehicle. The control device may comprise a processor configured to receive the image from the camera. The processor may facilitate autonomous driving of the autonomous vehicle using at least the image. The autonomous driving of the autonomous vehicle may be improved in response to a reduction of the ghosting effect in the image.

Certain embodiments of this disclosure may include some, all, or none of these advantages. These advantages and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1A illustrates an embodiment of a system for reducing the ghosting effect in images captured by a camera of an autonomous vehicle;
FIG. 1B illustrates an example image where a sample ghosting effect is shown;
FIG. 2A illustrates an isometric view of one embodiment of a camera housing configured to house a camera of an autonomous vehicle;
FIG. 2B illustrates a cross-sectional view of an embodiment of the camera housing of FIG. 2A;
FIG. 3A illustrates an isometric view of one embodiment of a camera housing configured to house an array of cameras of an autonomous vehicle;
FIG. 3B illustrates a cross-sectional view of an embodiment of the camera housing of FIG. 3A;
FIG. 4 illustrates a block diagram of an example autonomous vehicle configured to implement autonomous driving operations;
FIG. 5 illustrates an example system for providing autonomous driving operations used by the autonomous vehicle of FIG. 4; and
FIG. 6 illustrates a block diagram of an in-vehicle control computer included in the autonomous vehicle of FIG. 4.

### DETAILED DESCRIPTION

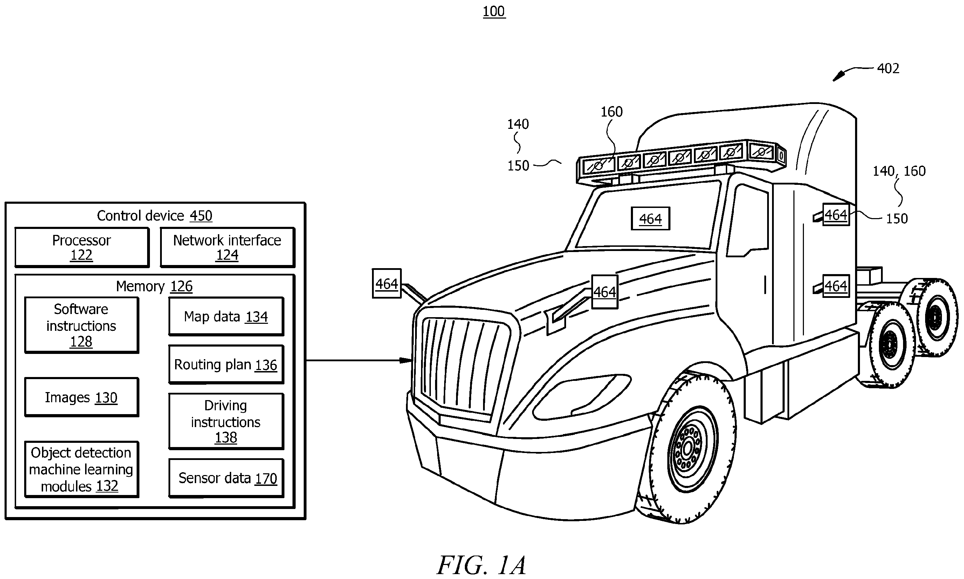

As described above, previous technologies fail to provide efficient, reliable, and safe navigation solutions for an autonomous vehicle in situations where the ghosting effect appear in images captured by cameras of an autonomous vehicle. The present disclosure provides various systems, methods, and devices to reduce the ghosting effect in images captured by cameras of an autonomous vehicle. Embodiments of the present disclosure and its advantages may be understood by referring to FIGS. 1A through 6.

### Example system for reducing ghosting effect in images captured by a camera of an autonomous vehicle

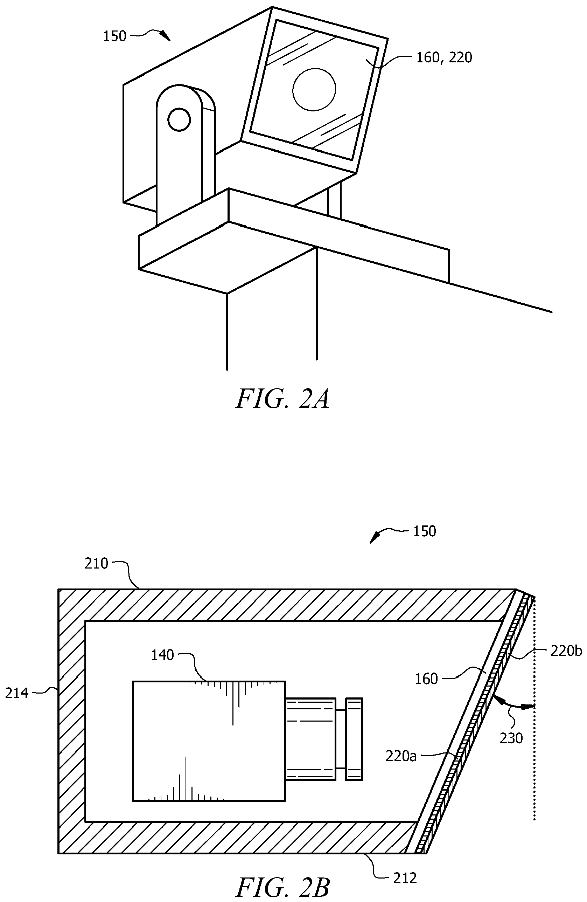

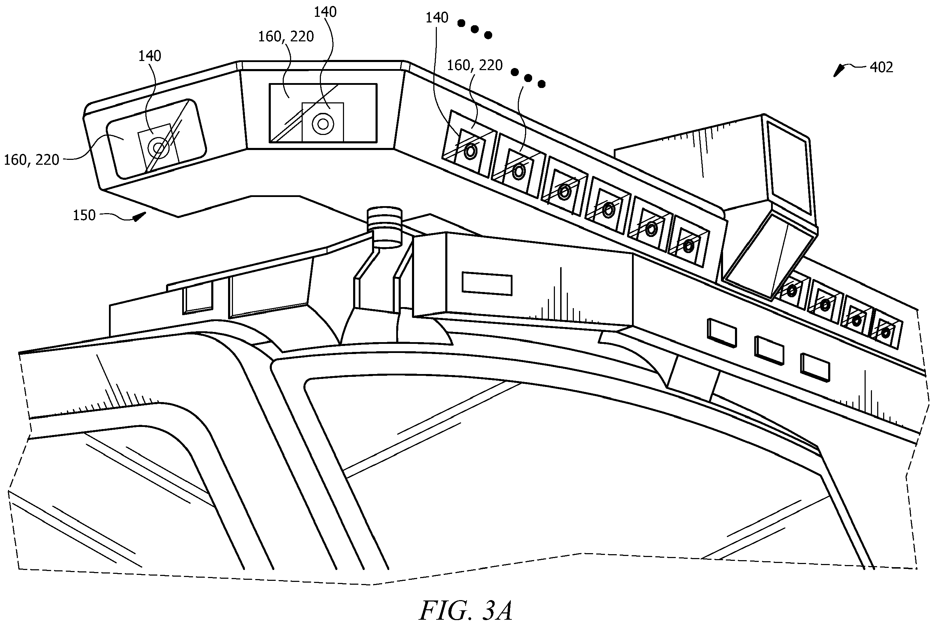

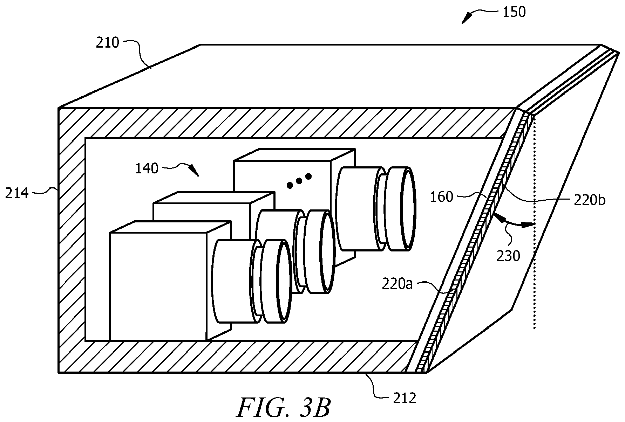

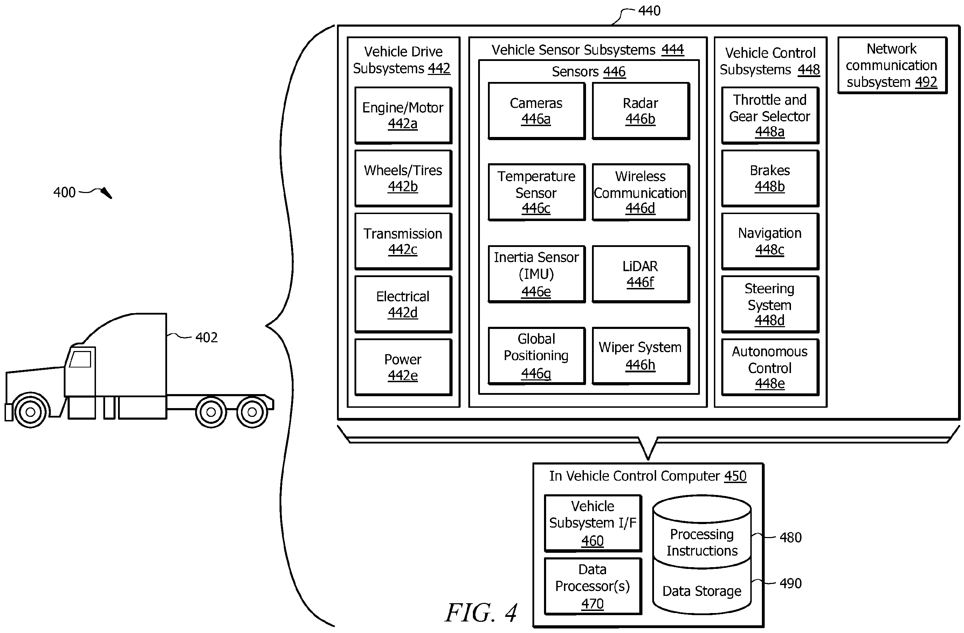

FIG. 1A illustrates an embodiment of a system 100 that may be configured to reduce the ghosting effect in images captured by one or more cameras 140 associated with an autonomous vehicle 402. In certain embodiments, system 100 may comprise an autonomous vehicle 402. The autonomous vehicle 402 may comprise one or more cameras 140. Each camera 140 may be an instance of camera 446a described in FIG. 4. Each camera 140 may be configured to capture images 130 of an environment within its field of view. The autonomous vehicle 402 may further comprise one or more camera housings 150. For example, a first camera housing 150 may be configured to house a single camera 140. In another example, a second camera housing 150 may be configured to house an array of cameras 140. The camera housing 150 may comprise a glass 160 that is positioned in front of the camera(s) 140 enclosed in the camera housing 150. The glass 160 may be coated with one or more materials 220 (see FIGS. 2B and 3B) comprising a hydrophobic material and an anti-reflective material that may be configured to reduce the ghosting effect in images 130. The camera housing 150 may further comprise a top portion and a bottom portion. The camera housing 150 may be formed such that the top portion extends beyond the bottom portion to form a tilt angle 230 (see FIGS. 2B and 3B) for the glass 160. The tilt angle 230 may create an extending portion over a camera 140 housed inside the camera housing 150. The tilt angle 230 may reduce indirect light from coming into a field of view of the camera 140. Reduction of indirect light for the camera 140 may lead to a further reduction of the ghosting effect in images 130. In this manner, any suitable number and combination of the tilt angle 230 of the glass 160, the hydrophobic material, and the anti-reflective material reduce the ghosting effects associated with images 130 captured by the camera 140. Example hardware configurations of the camera housing 150 are described in greater detail in FIGS. 2 and 3.

The autonomous vehicle may further comprise a control device 450. The control device 450 may comprise a processor 122 in signal communication with a memory 126. Memory 126 may store software instructions 128 that when executed by the processor 122, cause the control device 450 to perform one or more operations described herein. For example, when the software instructions 128 are executed, the control device 450 may facilitate autonomous driving of the autonomous vehicle 402 using at least one image 130 captured by one or more cameras 140, where autonomous driving of the autonomous vehicle 402 may be improved in response to a reduction of ghosting effect in images 130. System 100 may be configured as shown or in any other configuration.

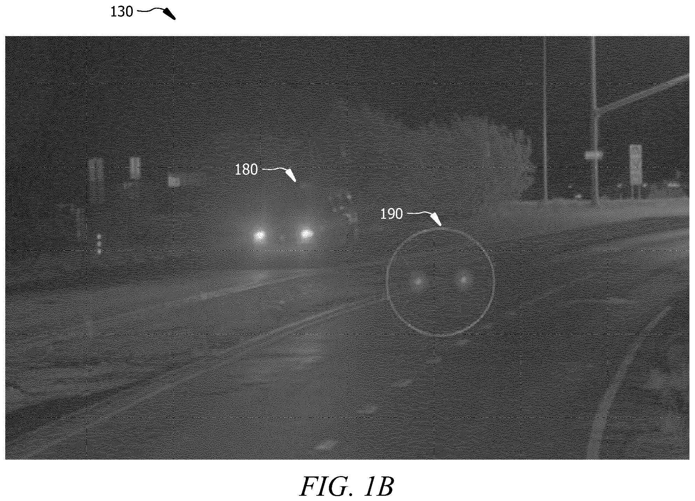

In some cases, an image captured by a camera 140 may include a ghosting effect. The ghosting effect may correspond to a replica of a light source in an image that is offset in position with respect to the light source in the image. An example of a ghosting effect in an image is shown in FIG. 1B. The ghosting effect may be produced by direct and/or indirect light bouncing off of lens(es) of the camera 140. In some instances, glare in an image may contribute to the ghosting effect in the image. In other words, light-induced noises created by glare may contribute to the ghosting effect. Glare may be a result of light reflection on objects in an image. The ghosting effect may confuse an object detection algorithm used for detecting objects on and around a road traveled by the autonomous vehicle 402. For example, the object detection module may indicate that it has detected an object in an image at a location where there is no object as the result of the ghosting effect. This may cause instructing the autonomous vehicle 402 to make an unnecessary maneuver to avoid the non-existing object. This may lead to unsafe driving experience for the autonomous vehicle 402 and vehicles around the autonomous vehicle 402. In another example, the object detection module may not be able to detect an object in an image due to light reflection on the object. This may cause instructing the autonomous vehicle 402 to head toward the object that may lead to collision with the object. System 100 may be configured to reduce the ghosting effect in images to improve the objection detection process and thus autonomous driving of the autonomous vehicle.

### System components

### Example autonomous vehicle

In one embodiment, the autonomous vehicle 402 may include a semi-truck tractor unit attached to a trailer to transport cargo or freight from one location to another location (see FIG. 4). The autonomous vehicle 402 is generally configured to travel along a road in an autonomous mode. The autonomous vehicle 402 may navigate using a plurality of components described in detail in FIGS. 4-6. The operation of the autonomous vehicle 402 is described in greater detail in FIGS. 4-6. The corresponding description below includes brief descriptions of certain components of the autonomous vehicle 402.

Control device 450 may be generally configured to control the operation of the autonomous vehicle 402 and its components and to facilitate autonomous driving of the autonomous vehicle 402. The control device 450 may be further configured to determine a pathway in front of the autonomous vehicle 402 that is safe to travel and free of objects or obstacles, and navigate the autonomous vehicle 402 to travel in that pathway. This process is described in more detail in FIGS. 4-6. The control device 450 may generally include one or more computing devices in signal communication with other components of the autonomous vehicle 402 (see FIG. 4). In this disclosure, the control device 450 may interchangeably be referred to as an in-vehicle control computer 450.

The control device 450 may be configured to detect objects on and around a road traveled by the autonomous vehicle 402 by analyzing the sensor data 170 and/or map data 134. For example, the control device 450 may detect objects on and around the road by implementing object detection machine learning modules 132. The object detection machine learning modules 132 may be implemented using neural networks and/or machine learning algorithms for detecting objects from images, videos, infrared images, point clouds, radar data, etc. The object detection machine learning modules 132 are described in more detail further below. The control device 450 may receive sensor data 170 from the sensors 446 positioned on the autonomous vehicle 402 to determine a safe pathway to travel. The sensor data 170 may include data captured by the sensors 446. For example, the sensor data 170 may include images 130 captured by the cameras 140.

Sensors 446 may be configured to capture any object within their detection zones or fields of view, such as landmarks, lane markers, lane boundaries, road boundaries, vehicles, pedestrians, road/traffic signs, among others. The sensors 446 may include rain sensors, cameras, infrared cameras, (Light Detection and Ranging) LiDAR sensors, motion sensors, infrared sensors, and the like. In some embodiments, the sensors 446 may be positioned around the autonomous vehicle 402 to capture the environment surrounding the autonomous vehicle 402. See the corresponding description of FIG. 4 for further description of the sensors 446.

### Control device

The control device 450 is described in greater detail in FIG. 4. In brief, the control device 450 may include the processor 122 in signal communication with the memory 126 and a network interface 124. The processor 122 may include one or more processing units that perform various functions as described herein. The memory 126 may store any data and/or instructions used by the processor 122 to perform its functions. For example, the memory 126 may store software instructions 128 that when executed by the processor 122 causes the control device 450 to perform one or more functions described herein.

The processor 122 may be one of the data processors 470 described in FIG. 4. The processor 122 comprises one or more processors operably coupled to the memory 126. The processor 122 is any electronic circuitry, including, but not limited to, state machines, one or more central processing unit (CPU) chips, logic units, cores (e.g., a multi-core processor), field-programmable gate arrays (FPGAs), application-specific integrated circuits (ASICs), or digital signal processors (DSPs). The processor 122 may be a programmable logic device, a microcontroller, a microprocessor, or any suitable combination of the preceding. The processor 122 is communicatively coupled to and in signal communication with the network interface 124 and memory 126. The one or more processors may be configured to process data and may be implemented in hardware or software. For example, the processor 122 may be 8-bit, 16-bit, 32-bit, 64-bit, or of any other suitable architecture. The processor 122 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors may be configured to implement various instructions. For example, the one or more processors may be configured to execute software instructions 128 to implement the functions disclosed herein, such as some or all of those described with respect to FIGS. 1-6. In some embodiments, the function described herein is implemented using logic units, FPGAs, ASICs, DSPs, or any other suitable hardware or electronic circuitry.

Network interface 124 may be a component of the network communication subsystem 492 described in FIG. 4. The network interface 124 may be configured to enable wired and/or wireless communications. The network interface 124 may be configured to communicate data between the autonomous vehicle 402 and other devices, systems, or domains. For example, the network interface 124 may comprise an NFC interface, a Bluetooth interface, a Zigbee interface, a Z-wave interface, a radio-frequency identification (RFID) interface, a WIFI interface, a local area network (LAN) interface, a wide area network (WAN) interface, a metropolitan area network (MAN) interface, a personal area network (PAN) interface, a wireless PAN (WPAN) interface, a modem, a switch, and/or a router. The processor 122 may be configured to send and receive data using the network interface 124. The network interface 124 may be configured to use any suitable type of communication protocol as would be appreciated by one of ordinary skill in the art.

The memory 126 may be one of the data storages 490 described in FIG. 4. The memory 126 may store any of the information described in FIGS. 1-6 along with any other data, instructions, logic, rules, or code operable to implement the function(s) described herein when executed by processor 122. For example, the memory 126 may store software instructions 128, images 130, object detection machine learning module 132, map data 134, routing plan 136, driving instructions 138, sensor data 170, and/or any other data/instructions. The software instructions 128 include code that when executed by the processor 122 causes the control device 450 to perform the functions described herein, such as some or all of those described in FIGS. 1-6. The memory 126 comprises one or more disks, tape drives, or solid-state drives, and may be used as an over-flow data storage device, to store programs when such programs are selected for execution, and to store instructions and data that are read during program execution. The memory 126 may be volatile or non-volatile and may comprise read-only memory (ROM), random-access memory (RAM), ternary content-addressable memory (TCAM), dynamic random-access memory (DRAM), and static random-access memory (SRAM). The memory 126 may include one or more of a local database, cloud database, network-attached storage (NAS), etc.

Object detection machine learning modules 132 may be implemented by the processor 122 executing software instructions 128, and may be generally configured to detect objects and obstacles from the sensor data 170. The object detection machine learning modules 132 may be implemented using neural networks and/or machine learning algorithms for detecting objects from any data type, such as images, videos, infrared images, point clouds, Radar data, etc.

In some embodiments, the object detection machine learning modules 132 may be implemented using machine learning algorithms, such as Support Vector Machine (SVM), Naive Bayes, Logistic Regression, k-Nearest Neighbors, Decision Trees, or the like. In some embodiments, the object detection machine learning modules 132 may utilize a plurality of neural network layers, convolutional neural network layers, and/or the like, in which weights and biases of these layers are optimized in the training process of the object detection machine learning modules 132. The object detection machine learning modules 132 may be trained by a training dataset that may include samples of data types labeled with one or more objects in each sample. For example, the training dataset may include sample images of objects (e.g., vehicles, lane markings, pedestrians, road signs, obstacles, etc.) labeled with object(s) in each sample image. Similarly, the training dataset may include samples of other data types, such as videos, infrared images, point clouds, Radar data, etc. labeled with object(s) in each sample data. The object detection machine learning modules 132 may be trained, tested, and refined by the training dataset and the sensor data 170. The object detection machine learning modules 132 use the sensor data 170 (which are not labeled with objects) to increase their accuracy of predictions in detecting objects. For example, supervised and/or unsupervised machine learning algorithms may be used to validate the predictions of the object detection machine learning modules 132 in detecting objects in the sensor data 170.

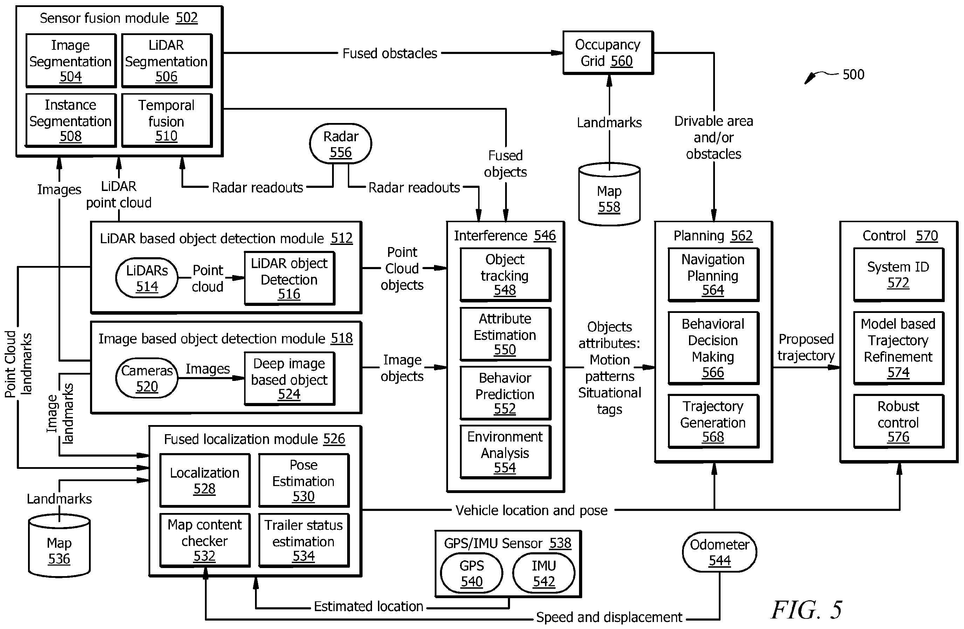

Map data 134 may include a virtual map of a city or an area that includes the road traveled by an autonomous vehicle 402. In some examples, the map data 134 may include the map 558 and map database 536 (see FIG. 5 for descriptions of the map 558 and map database 536). The map data 134 may include drivable areas, such as roads, paths, highways, and undrivable areas, such as terrain (determined by the occupancy grid module 560, see FIG. 5 for descriptions of the occupancy grid module 560). The map data 134 may specify location coordinates of road signs, lanes, lane markings, lane boundaries, road boundaries, traffic lights, obstacles, etc.

Routing plan 136 is a plan for traveling from a start location (e.g., a first autonomous vehicle launchpad/landing pad) to a destination (e.g., a second autonomous vehicle launchpad/landing pad). For example, the routing plan 136 may specify a combination of one or more streets, roads, and highways in a specific order from the start location to the destination. The routing plan 136 may specify stages, including the first stage (e.g., moving out from a start location/launch pad), a plurality of intermediate stages (e.g., traveling along particular lanes of one or more particular street/road/highway), and the last stage (e.g., entering the destination/landing pad). The routing plan 136 may include other information about the route from the start position to the destination, such as road/traffic signs in that routing plan 136, etc.

Driving instructions 138 may be implemented by the planning module (see descriptions of the planning module 562 in FIG. 5.) The driving instructions 138 may include instructions and rules to adapt autonomous driving of the autonomous vehicle 402 according to the driving rules of each stage of the routing plan 136. For example, the driving instructions 138 may include instructions to stay within the speed range of a road traveled by the autonomous vehicle 402, adapt the speed of the autonomous vehicle 402 with respect to observed changes by the sensors 446, such as speeds of surrounding vehicles, objects within the detection zones of the sensors 446, etc.

### Example ghosting effect

FIG. 1B illustrates an example image 130 where an example ghosting effect 190 is shown. In FIG. 1B, light sources of a vehicle 180 are replicated offset in position with respect to the light sources of the vehicle 180. The replicated light sources may be referred to as the ghosting effect 190. As noted in FIG. 1A, the ghosting effect 190 may confuse the object detection machine learning module 132 of the autonomous vehicle 402. Thus, the ghosting effect 190 may cause unsafe driving condition for navigation of the autonomous vehicle 402 and vehicles around the autonomous vehicle 402. Referring back to FIG. 1A, system 100 may be configured to reduce ghosting effects (similar to the ghosting effect 190 shown in FIG. 1B) and other light-induced noise artifacts in an image 130 due to the use of the set of materials 220 (see FIGS. 2A-3B) on the glass 140 and tilt angle 230 (see FIGS. 2B and 3B) of the glass 140 of the camera housing 150. Reduction of the ghosting effects may improve safety in navigation of the autonomous vehicle 402, and provide a safer driving condition for the autonomous vehicle 402 and vehicles around the autonomous vehicle.

### Example camera housing

FIG. 2A illustrates an isometric view of example hardware configurations of a camera housing 150 configured to house a single camera 140. FIG. 2B illustrates a cross-sectional view of the camera housing 150 of FIG. 2A. In certain embodiments, the camera 140 may be positioned with respect to the autonomous vehicle 402 to face at least a portion of a road ahead of the autonomous vehicle 402. In certain embodiments, the camera 140 may be positioned with respect to the autonomous vehicle 402 to face at least a portion of a road behind the autonomous vehicle 402. As can be seen in the example of FIG. 2B, the camera housing 150 may comprise a top portion 210, a bottom portion 212, a back portion 214, and a glass 160.

The glass 160 may be coupled to the top portion 210 and the bottom portion 212 using an adhesive material, such as automotive-grade adhesive material. In certain embodiments, the glass 160 may be formed of borosilicate and/or any other glass alloy. The glass 160 may have any suitable thickness, e.g., from 2 millimeters (mm) to 100 mm.

In certain embodiments, the glass 160 may be coated with a set of materials 220. Each material 220 may be coated on the glass 160 using milling techniques, thin film deposition techniques, and/or any other coating techniques. The set of materials 220 may comprise a hydrophobic material 220 and an anti-reflective material 220. The hydrophobic (i.e., water-repellant) material 220 may reduce the accumulation of liquid droplets on the surface of the glass 160. Examples of the hydrophobic material 220 may include silazane, cctadecyltrichlorosilane, organosilane, and/or any other suitable hydrophobic material 220. The anti-reflective material 220 may be configured to reduce the ghosting effect in images 130 captured by the camera 140. Examples of the anti-reflective material 220 coating may include an index-matching, a single-layer interference, a multi-layer interference, an absorbing anti-reflective coating, a moth-eye coating, and a circular polarizer, or any combination thereof.

With index-matching, the anti-reflective material 220 has a refractive index that closely approximates a reflective index of the glass 160. When the anti-reflective material 220 is in contact with the glass 160, light passes from one to the other with neither reflection nor refraction. With the single-layer interference coating, a single layer anti-reflective material 220 may be used to reduce light reflection at one wavelength, e.g., at a 550-nanometer wavelength or any other wavelength. With a multi-layer interference coating, multiple layers of anti-reflective material(s) 220 are used to reduce light reflection at multiple wavelengths, e.g., the entire visible spectrum. With an absorbing anti-reflective coating, an anti-reflective material 220 that is configured to absorb incident light rather than transmitting the incident light may be used. With a moth-eye coating, the anti-reflective material 220 may be formed to have a moth-eye pattern. The moth-eye pattern may include a pattern of subwavelength bumps which reduces light reflection by creating an effective refractive index gradient between the air and the medium. With a circular polarizer coating, a circular polarizer laminated to a surface of the glass 160 may be used to eliminate reflections. Each coating material 220 may have any suitable thickness, e.g., 200 nanometer (nm) to 1400 nm.

In the example of FIG. 2B, the glass 160 is coated with a first coating material 220a and a second coating material 220b. One of the first and second coating materials 220a and 220b may be an anti-reflective material, and the other coating material may be a hydrophobic material. Therefore, in one embodiment, the coating material 220a may be the hydrophobic material and the coating material 220b may be the anti-reflective material. In another embodiment, the coating material 220a may be the anti-reflective material and the coating material 220b may be the hydrophobic material.

Further in the example of FIG. 2B, the set of coating materials 220 is shown to be coated on the outside surface of the glass 160. In another embodiment, the set of coating materials 220 can be coated on the inside surface of the glass 160. In certain embodiments, one or more coating materials 220 may be coated on a single surface or both surfaces of the glass 160. For example, at least one coating material 220 may be coated on the inside surface of the glass 160, and at least one coating material 220 may be coated on the outside surface of the glass 160.

The top portion 210 of camera housing 150 may extend beyond the bottom portion 212 to form a tilt angle 230 for the positioning of glass 160. By tilting glass 160 at tilt angle 230 in this manner, the camera housing 150 may reduce indirect light from coming into a field of view of the camera 140. In one embodiment, the tilt angle 230 may be about 20 degrees. In alternative embodiments, the tilt angle 230 may be any other suitable angle, e.g., 10°, 15°, 25°, etc.

The top portion 210, bottom portion 212, and back portion 214 of camera housing 150 may form an enclosure for the camera 140. Each of the top portion 210, bottom portion 212, and back portion 214 may have a dimension to accommodate housing the camera 140. Each of the top portion 210, bottom portion 212, and back portion 214 may have any suitable width, e.g., from 0.1 centimeters (cm) to 2 cm. In certain embodiments, each of the top portion 210, bottom portion 212, and back portion 214 of camera housing 150 may be formed of aluminum, aluminum alloys, metal, plastic, or any other suitable material.

FIG. 3A illustrates an isometric view of an embodiment of a camera housing 150 configured to house an array of cameras 140. FIG. 3B illustrates a cross-sectional view of the camera housing 150 of FIG. 3A. In certain embodiments, the second embodiment of the camera housing 150 shown in FIGS. 3A and 3B may be similar to the first embodiment of the camera housing 150 shown in FIGS. 2A and 2AB except that the second embodiment of the camera housing 150 may be configured to house multiple cameras 140. In FIGS. 3A and 3B, the camera housing 150 may comprise multiple compartments for housing multiple cameras 140. The camera housing 150 may be configured to have any suitable number and combination of compartments. Likewise, the camera housing 150 may be configured to house any suitable number and combination of cameras 140.

In certain embodiments, the array of cameras 140 may be positioned with respect to the autonomous vehicle 402 to face at least a portion of a road ahead of the autonomous vehicle 402. In certain embodiments, the array of cameras 140 may be positioned with respect to the autonomous vehicle 402 to face at least a portion of a road behind the autonomous vehicle 402. As can be seen in FIG. 3A, the camera housing 150 may have a curved frame structure. Thus, a first number of cameras 140 may face a portion of a road ahead of the autonomous vehicle 402, and a second number of cameras 140 may face a portion of a road on one or more sides of the autonomous vehicle 402, and a third number of cameras 140 may face a portion of a road behind the autonomous vehicle 402.

Referring to FIG. 3B, the camera housing 150 may comprise the top portion 210, the bottom portion 212, the back portion 214, and the glass 160. Some aspects of the top portion 210, the bottom portion 212, the back portion 214, and the glass 160 are described in FIGS. 2A and 2B.

The glass 160 may be positioned in front of the array of cameras 140. The glass 160 may be coupled to the top portion 210 and the bottom portion 212 using an adhesive material, such as automotive-grade adhesive material. In certain embodiments, the glass 160 may be formed of borosilicate and/or any other glass alloy. The glass 160 may have any suitable thickness, e.g., from 2 millimeters (mm) to 100 mm.

The glass 160 may be coated with the set of materials 220. Each material 220 may be coated on the glass 160 using milling techniques, thin film deposition techniques, and/or any other coating techniques. The set of materials 220 may comprise a hydrophobic material 220 and an anti-reflective material 220. The hydrophobic (i.e., water-repellant) material 220 may be configured to reduce the accumulation of liquid droplets on the surface of the glass 160. Examples of the hydrophobic material 220 may include silazane, cctadecyltrichlorosilane, organosilane, and/or any other suitable hydrophobic material 220. The anti-reflective material 220 may be configured to reduce the ghosting effect in images 130 captured by the cameras 140. Examples of the anti-reflective material 220 coating may include an index-matching, a single-layer interference, a multi-layer interference, an absorbing anti-reflective coating, a moth-eye coating, and a circular polarizer, or any combination thereof.

With index-matching, the anti-reflective material 220 has a refractive index that closely approximates a reflective index of the glass 160. When the anti-reflective material 220 is in contact with the glass 160, light passes from one to the other with neither reflection nor refraction. With the single-layer interference coating, a single layer anti-reflective material 220 may be used to reduce light reflection at one wavelength, e.g., at a 550-nanometer wavelength or any other wavelength. With a multi-layer interference coating, multiple layers of anti-reflective material(s) 220 are used to reduce light reflection at multiple wavelengths, e.g., the entire visible spectrum. With an absorbing anti-reflective coating, an anti-reflective material 220 that is configured to absorb incident light rather than transmitting the incident light may be used. With a moth-eye coating, the anti-reflective material 220 may be formed to have a moth-eye pattern. The moth-eye pattern may include a pattern of subwavelength bumps which reduces light reflection by creating an effective refractive index gradient between the air and the medium. With a circular polarizer coating, a circular polarizer laminated to a surface of the glass 160 may be used to eliminate reflections. Each coating material 220 may have any suitable thickness, e.g., 200 nanometer (nm) to 1400 nm.

In the example of FIG. 3B, the glass 160 may be coated with a first coating material 220a and a second coating material 220b. One of the first and second coating materials 220a and 220b may be an anti-reflective material, and the other coating material may be a hydrophobic material. Therefore, in one embodiment, the coating material 220a may be the hydrophobic material and the coating material 220b may be the anti-reflective material. In another embodiment, the coating material 220a may be the anti-reflective material and the coating material 220b may be the hydrophobic material.

Further in the example of FIG. 3B, the set of coating materials 220 is shown to be coated on the outside surface of the glass 160. In another embodiment, the set of coating materials 220 can be coated on the inside surface of the glass 160. In certain embodiments, one or more coating materials 220 may be coated on a single surface or both surfaces of the glass 160. For example, at least one coating material 220 may be coated on the inside surface of the glass 160, and at least one coating material 220 may be coated on the outside surface of the glass 160.

The top portion 210 of camera housing 150 may extend beyond the bottom portion 212 to form a tilt angle 230 for the positioning of glass 160. By tilting glass 160 at tilt angle 230 in this manner, the camera housing 150 may reduce indirect light from coming into fields of view of the cameras 140. In one embodiment, the tilt angle 230 may be about 20 degrees. In alternative embodiments, the tilt angle 230 may be any other suitable degree, e.g., 10°, 15°, 25°, etc.

The top portion 210, bottom portion 212, and back portion 214 of camera housing 150 may form an enclosure for the cameras 140. Each of the top portion 210, bottom portion 212, and back portion 214 may have a dimension to accommodate housing the cameras 140. Each of the top portion 210, bottom portion 212, and back portion 214 may have any suitable width, e.g., from 0.1 centimeters (cm) to 2 cm. In certain embodiments, each of the top portion 210, bottom portion 212, and back portion 214 of camera housing 150 may be formed of aluminum, aluminum alloys, metal, plastic, or any other suitable material.

### Improved autonomous driving due to reduction of ghosting effect

Referring back to FIG. 1A, in an example scenario, while traveling along a road, the camera 140 may capture an image 130 of at least a portion of the road traveled by the autonomous vehicle 402. The camera 140 may communicate the image 130 to the control device 450 for processing. The image 130 may be used to detect objects on and/or around the road. The control device 450 may use the image 130 to determine a safe pathway to travel. In certain embodiments, the image 130 may be included in the sensor data 170 that the control device 450 receives from the sensors 446 of the autonomous vehicle 402.

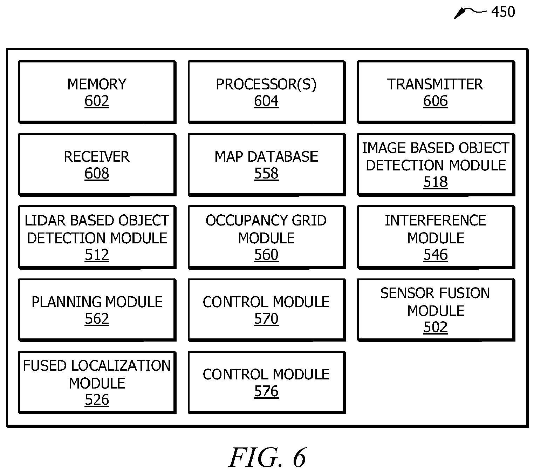

Upon receiving the image 130, the control device 450 may facilitate autonomous driving of the autonomous vehicle 402 using at least the image 130. In this process, the control device 450 may feed the image 130 to the object detection machine learning module 132 to detect objects on and/or around the road shown in the image 130. This process is described in greater detail in FIG. 6.

The light-induced noise artifacts (e.g., ghosting effect) may be reduced in the image 130 due to the use of the set of materials 220 and the tilt angle 230 as discussed above. Thus, autonomous driving of the autonomous vehicle 402 may be improved in response to a reduction of the ghosting effect in the image 130. Furthermore, the accuracy of the navigation and decision-making of the control device 450 in determining a safe obstacle-free pathway to travel may improve.

### Example autonomous vehicle and its operation

FIG. 4 shows a block diagram of an example vehicle ecosystem 400 in which autonomous driving operations can be determined. As shown in FIG. 4, the autonomous vehicle 402 may be a semi-trailer truck. The vehicle ecosystem 400 may include several systems and components that can generate and/or deliver one or more sources of information/data and related services to the in-vehicle control computer 450 that may be located in an autonomous vehicle 402. The in-vehicle control computer 450 can be in data communication with a plurality of vehicle subsystems 440, all of which can be resident in the autonomous vehicle 402. A vehicle subsystem interface 460 may be provided to facilitate data communication between the in-vehicle control computer 450 and the plurality of vehicle subsystems 440. In some embodiments, the vehicle subsystem interface 460 can include a controller area network (CAN) controller to communicate with devices in the vehicle subsystems 440.

The autonomous vehicle 402 may include various vehicle subsystems that support the operation of autonomous vehicle 402. The vehicle subsystems 440 may include a vehicle drive subsystem 442, a vehicle sensor subsystem 444, a vehicle control subsystem 448, and/or network communication subsystem 492. The components or devices of the vehicle drive subsystem 442, the vehicle sensor subsystem 444, and the vehicle control subsystem 448 shown in FIG. 4 are examples. The autonomous vehicle 402 may be configured as shown or any other configurations.

The vehicle drive subsystem 442 may include components operable to provide powered motion for the autonomous vehicle 402. In an example embodiment, the vehicle drive subsystem 442 may include an engine/motor 442a, wheels/tires 442b, a transmission 442c, an electrical subsystem 442d, and a power source 442e.

The vehicle sensor subsystem 444 may include a number of sensors 446 configured to sense information about an environment or condition of the autonomous vehicle 402. The vehicle sensor subsystem 444 may include one or more cameras 446a or image capture devices, a radar unit 446b, one or more temperature sensors 446c, a wireless communication unit 446d (e.g., a cellular communication transceiver), an inertial measurement unit (IMU) 446e, a laser range finder/LiDAR unit 446f, a Global Positioning System (GPS) transceiver 446g, and/or a wiper control system 446h. The vehicle sensor subsystem 444 may also include sensors configured to monitor internal systems of the autonomous vehicle 402 (e.g., an 02 monitor, a fuel gauge, an engine oil temperature, etc.).

The IMU 446e may include any combination of sensors (e.g., accelerometers and gyroscopes) configured to sense position and orientation changes of the autonomous vehicle 402 based on inertial acceleration. The GPS transceiver 446g may be any sensor configured to estimate a geographic location of the autonomous vehicle 402. For this purpose, the GPS transceiver 446g may include a receiver/transmitter operable to provide information regarding the position of the autonomous vehicle 402 with respect to the Earth. The radar unit 446b may represent a system that utilizes radio signals to sense objects within the local environment of the autonomous vehicle 402. In some embodiments, in addition to sensing the objects, the radar unit 446b may additionally be configured to sense the speed and the heading of the objects proximate to the autonomous vehicle 402. The laser range finder or LiDAR unit 446f may be any sensor configured to use lasers to sense objects in the environment in which the autonomous vehicle 402 is located. The cameras 446a may include one or more devices configured to capture a plurality of images of the environment of the autonomous vehicle 402. The cameras 446a may be still image cameras or motion video cameras.

The vehicle control subsystem 448 may be configured to control the operation of the autonomous vehicle 402 and its components. Accordingly, the vehicle control subsystem 448 may include various elements such as a throttle and gear selector 448a, a brake unit 448b, a navigation unit 448c, a steering system 448d, and/or an autonomous control unit 448e. The throttle and gear selector 448a may be configured to control, for instance, the operating speed of the engine and, in turn, control the speed of the autonomous vehicle 402. The throttle and gear selector 448a may be configured to control the gear selection of the transmission. The brake unit 448b can include any combination of mechanisms configured to decelerate the autonomous vehicle 402. The brake unit 448b can slow the autonomous vehicle 402 in a standard manner, including by using friction to slow the wheels or engine braking. The brake unit 448b may include an anti-lock brake system (ABS) that can prevent the brakes from locking up when the brakes are applied. The navigation unit 448c may be any system configured to determine a driving path or route for the autonomous vehicle 402. The navigation unit 448c may additionally be configured to update the driving path dynamically while the autonomous vehicle 402 is in operation. In some embodiments, the navigation unit 448c may be configured to incorporate data from the GPS transceiver 446g and one or more predetermined maps so as to determine the driving path for the autonomous vehicle 402. The steering system 448d may represent any combination of mechanisms that may be operable to adjust the heading of autonomous vehicle 402 in an autonomous mode or in a driver-controlled mode.

The autonomous control unit 448e may represent a control system configured to identify, evaluate, and avoid or otherwise negotiate potential obstacles or obstructions in the environment of the autonomous vehicle 402. In general, the autonomous control unit 448e may be configured to control the autonomous vehicle 402 for operation without a driver or to provide driver assistance in controlling the autonomous vehicle 402. In some embodiments, the autonomous control unit 448e may be configured to incorporate data from the GPS transceiver 446g, the radar unit 446b, the LiDAR unit 446f, the cameras 446a, and/or other vehicle subsystems to determine the driving path or trajectory for the autonomous vehicle 402.

The network communication subsystem 492 may comprise network interfaces, such as routers, switches, modems, and/or the like. The network communication subsystem 492 may be configured to establish communication between the autonomous vehicle 402 and other systems, servers, etc. The network communication subsystem 492 may be further configured to send and receive data from and to other systems.

Many or all of the functions of the autonomous vehicle 402 can be controlled by the in-vehicle control computer 450. The in-vehicle control computer 450 may include at least one data processor 470 (which can include at least one microprocessor) that executes processing instructions 480 stored in a non-transitory computer-readable medium, such as the data storage device 490 or memory. The in-vehicle control computer 450 may also represent a plurality of computing devices that may serve to control individual components or subsystems of the autonomous vehicle 402 in a distributed fashion. In some embodiments, the data storage device 490 may contain processing instructions 480 (e.g., program logic) executable by the data processor 470 to perform various methods and/or functions of the autonomous vehicle 402, including those described with respect to FIGS. 1-6.

The data storage device 490 may contain additional instructions as well, including instructions to transmit data to, receive data from, interact with, or control one or more of the vehicle drive subsystem 442, the vehicle sensor subsystem 444, and the vehicle control subsystem 448. The in-vehicle control computer 450 can be configured to include a data processor 470 and a data storage device 490. The in-vehicle control computer 450 may control the function of the autonomous vehicle 402 based on inputs received from various vehicle subsystems (e.g., the vehicle drive subsystem 442, the vehicle sensor subsystem 444, and the vehicle control subsystem 448).

FIG. 5 shows an example of a system 500 for providing precise autonomous driving operations. The system 500 may include several modules that can operate in the in-vehicle control computer 450, as described in FIG. 4. The in-vehicle control computer 450 may include a sensor fusion module 502 shown in the top left corner of FIG. 5, where the sensor fusion module 502 may perform at least four image or signal processing operations. The sensor fusion module 502 can obtain images from cameras located on an autonomous vehicle to perform image segmentation 504 to detect the presence of moving objects (e.g., other vehicles, pedestrians, etc.,) and/or static obstacles (e.g., stop sign, speed bump, terrain, etc.,) located around the autonomous vehicle. The sensor fusion module 502 can obtain LiDAR point cloud data item from LiDAR sensors located on the autonomous vehicle to perform LiDAR segmentation 506 to detect the presence of objects and/or obstacles located around the autonomous vehicle.

The sensor fusion module 502 can perform instance segmentation 508 on image and/or point cloud data items to identify an outline (e.g., boxes) around the objects and/or obstacles located around the autonomous vehicle. The sensor fusion module 502 can perform temporal fusion 510 where objects and/or obstacles from one image and/or one frame of point cloud data item are correlated with or associated with objects and/or obstacles from one or more images or frames subsequently received in time.

The sensor fusion module 502 can fuse the objects and/or obstacles from the images obtained from the camera and/or point cloud data item obtained from the LiDAR sensors. For example, the sensor fusion module 502 may determine based on a location of two cameras that an image from one of the cameras comprising one half of a vehicle located in front of the autonomous vehicle is the same as the vehicle captured by another camera. The sensor fusion module 502 may send the fused object information to the interference module 546 and the fused obstacle information to the occupancy grid module 560. The in-vehicle control computer may include the occupancy grid module 560 which can retrieve landmarks from a map database 558 stored in the in-vehicle control computer. The occupancy grid module 560 can determine drivable areas and/or obstacles from the fused obstacles obtained from the sensor fusion module 502 and the landmarks stored in the map database 558. For example, the occupancy grid module 560 can determine that a drivable area may include a speed bump obstacle.

Below the sensor fusion module 502, the in-vehicle control computer 450 may include a LiDAR-based object detection module 512 that can perform object detection 516 based on point cloud data item obtained from the LiDAR sensors 514 located on the autonomous vehicle. The object detection 516 technique can provide a location (e.g., in 3D world coordinates) of objects from the point cloud data item. Below the LiDAR-based object detection module 512, the in-vehicle control computer may include an image-based object detection module 518 that can perform object detection 524 based on images obtained from cameras 520 located on the autonomous vehicle. The object detection 518 technique can employ a deep machine learning technique 524 to provide a location (e.g., in 3D world coordinates) of objects from the image provided by the camera 520.

The radar 556 on the autonomous vehicle can scan an area in front of the autonomous vehicle or an area towards which the autonomous vehicle is driven. The radar data may be sent to the sensor fusion module 502 that can use the radar data to correlate the objects and/or obstacles detected by the radar 556 with the objects and/or obstacles detected from both the LiDAR point cloud data item and the camera image. The radar data also may be sent to the interference module 546 that can perform data processing on the radar data to track objects by object tracking module 548 as further described below.

The in-vehicle control computer may include an interference module 546 that receives the locations of the objects from the point cloud and the objects from the image, and the fused obj ects from the sensor fusion module 502. The interference module 546 also receives the radar data with which the interference module 546 can track objects by object tracking module 548 from one point cloud data item and one image obtained at one time instance to another (or the next) point cloud data item and another image obtained at another subsequent time instance.

The interference module 546 may perform object attribute estimation 550 to estimate one or more attributes of an object detected in an image or point cloud data item. The one or more attributes of the object may include a type of object (e.g., pedestrian, car, or truck, etc.). The interference module 546 may perform behavior prediction 552 to estimate or predict motion pattern of an object detected in an image and/or a point cloud. The behavior prediction 552 can be performed to detect a location of an object in a set of images received at different points in time (e.g., sequential images) or in a set of point cloud data item received at different points in time (e.g., sequential point cloud data items). In some embodiments, the behavior prediction 552 can be performed for each image received from a camera and/or each point cloud data item received from the LiDAR sensor. In some embodiments, the interference module 546 can be performed (e.g., run or executed) to reduce computational load by performing behavior prediction 552 on every other or after every pre-determined number of images received from a camera or point cloud data item received from the LiDAR sensor (e.g., after every two images or after every three-point cloud data items).

The behavior prediction 552 feature may determine the speed and direction of the objects that surround the autonomous vehicle from the radar data, where the speed and direction information can be used to predict or determine motion patterns of objects. A motion pattern may comprise a predicted trajectory information of an object over a pre-determined length of time in the future after an image is received from a camera. Based on the motion pattern predicted, the interference module 546 may assign motion pattern situational tags to the objects (e.g., "located at coordinates (x,y)," "stopped," "driving at 50mph," "speeding up" or "slowing down"). The situation tags can describe the motion pattern of the object. The interference module 546 may send the one or more object attributes (e.g., types of the objects) and motion pattern situational tags to the planning module 562. The interference module 546 may perform an environment analysis 554 using any information acquired by system 500 and any number and combination of its components.

The in-vehicle control computer may include the planning module 562 that receives the object attributes and motion pattern situational tags from the interference module 546, the drivable area and/or obstacles, and the vehicle location and pose information from the fused localization module 526 (further described below).

The planning module 562 can perform navigation planning 564 to determine a set of trajectories on which the autonomous vehicle can be driven. The set of trajectories can be determined based on the drivable area information, the one or more object attributes of objects, the motion pattern situational tags of the objects, location of the obstacles, and the drivable area information. In some embodiments, the navigation planning 564 may include determining an area next to the road where the autonomous vehicle can be safely parked in case of emergencies. The planning module 562 may include behavioral decision making 566 to determine driving actions (e.g., steering, braking, throttle) in response to determining changing conditions on the road (e.g., traffic light turned yellow, or the autonomous vehicle is in an unsafe driving condition because another vehicle drove in front of the autonomous vehicle and in a region within a pre-determined safe distance of the location of the autonomous vehicle). The planning module 562 may perform trajectory generation 568 and may select a trajectory from the set of trajectories determined by the navigation planning operation 564. The selected trajectory information may be sent by the planning module 562 to the control module 570.

The in-vehicle control computer may include a control module 570 that receives the proposed trajectory from the planning module 562 and the autonomous vehicle location and pose from the fused localization module 526. The control module 570 may include a system identifier 572. The control module 570 can perform a model-based trajectory refinement 574 to refine the proposed trajectory. For example, the control module 570 can apply filtering (e.g., Kalman filter) to make the proposed trajectory data smooth and/or to minimize noise. The control module 570 may perform the robust control 576 by determining, based on the refined proposed trajectory information and current location and/or pose of the autonomous vehicle, an amount of brake pressure to apply, a steering angle, a throttle amount to control the speed of the vehicle, and/or a transmission gear. The control module 570 can send the determined brake pressure, steering angle, throttle amount, and/or transmission gear to one or more devices in the autonomous vehicle to control and facilitate precise driving operations of the autonomous vehicle.

The deep image-based object detection 524 performed by the image-based object detection module 518 can also be used detect landmarks (e.g., stop signs, speed bumps, etc.,) on the road. The in-vehicle control computer may include a fused localization module 526 that obtains landmarks detected from images, the landmarks obtained from a map database 536 stored on the in-vehicle control computer, the landmarks detected from the point cloud data item by the LiDAR-based object detection module 512, the speed and displacement from the odometer sensor 544 and the estimated location of the autonomous vehicle from the GPS/IMU sensor 538 (i.e., GPS sensor 540 and IMU sensor 542) located on or in the autonomous vehicle. Based on this information, the fused localization module 526 can perform a localization operation 528 to determine a location of the autonomous vehicle, which can be sent to the planning module 562 and the control module 570.

The fused localization module 526 can estimate pose 530 of the autonomous vehicle based on the GPS and/or IMU sensors 538. The pose of the autonomous vehicle can be sent to the planning module 562 and the control module 570. The fused localization module 526 can also estimate status (e.g., location, possible angle of movement) of the trailer unit based on (e.g., trailer status estimation 534), for example, the information provided by the IMU sensor 542 (e.g., angular rate and/or linear velocity). The fused localization module 526 may also check the map content 532.

FIG. 6 shows an exemplary block diagram of an in-vehicle control computer 450 included in an autonomous vehicle 402. The in-vehicle control computer 450 may include at least one processor 604 and a memory 602 having instructions stored thereupon (e.g., software instructions 128 and processing instructions 480 in FIGS. 1 and 4, respectively). The instructions, upon execution by the processor 604, configure the in-vehicle control computer 450 and/or the various modules of the in-vehicle control computer 450 to perform the operations described in FIGS. 1-6. The transmitter 606 may transmit or send information or data to one or more devices in the autonomous vehicle. For example, the transmitter 606 can send an instruction to one or more motors of the steering wheel to steer the autonomous vehicle. The receiver 608 receives information or data transmitted or sent by one or more devices. For example, the receiver 608 receives a status of the current speed from the odometer sensor or the current transmission gear from the transmission. The transmitter 606 and receiver 608 also may be configured to communicate with the plurality of vehicle subsystems 440 and the in-vehicle control computer 450 described above in FIGS. 4 and 5.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated into another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

To aid the Patent Office, and any readers of any patent issued on this application in interpreting the claims appended hereto, applicants note that they do not intend any of the appended claims to invoke 35 U.S.C. § 112(f) as it exists on the date of filing hereof unless the words "means for" or "step for" are explicitly used in the particular claim.

Implementations of the disclosure can be described in view of the following clauses, the features of which can be combined in any reasonable manner.

Clause 1. A system, comprising:
a camera housing configured to house a camera, wherein:
   the camera housing is mounted to an autonomous vehicle;
   the camera housing comprises a glass positioned in front of the camera;
   the glass is coated with a set of materials comprising a hydrophobic material and an anti-reflective material;
   the set of materials is configured to reduce ghosting effect on an image captured by the camera, wherein the ghosting effect corresponds to a replica of a light source in the image that is offset in position with respect to the light source;
   the camera housing further comprises a top portion and a bottom portion;
   the glass is coupled to the top portion and the bottom portion;
   the top portion extends beyond the bottom portion to form a tilt angle; and
   the tilt angle is configured to reduce indirect light from coming into a field of view of the camera;
a control device associated with the autonomous vehicle and comprising at least one processor configured to at least:
   receive the image from the camera; and
   facilitate autonomous driving of the autonomous vehicle using at least the image, wherein:
      the ghosting effect is reduced in the image due to using the set of materials; and
      the autonomous driving of the autonomous vehicle is improved in response to a reduction of the ghosting effect in the image.

Clause 2. The system of Clause 1, wherein the tilt angle is between 15 and 25 degrees.

Clause 3. The system of Clause 1, wherein the glass is formed from a material comprising borosilicate.

Clause 4. The system of Clause 1, wherein at least one of the set of materials is coated on an outside surface of the glass.

Clause 5. The system of Clause 1, wherein at least one of the set of materials is coated on an inside surface of the glass.

Clause 6. The system of Clause 1, wherein the camera is positioned to face at least a portion of a road ahead of the autonomous vehicle.

Clause 7. The system of Clause 1, wherein the camera is positioned to face at least a portion of a road behind the autonomous vehicle.

Clause 8. A system comprising:
a camera housing configured to house an array of cameras, wherein:
   the camera housing is mounted to an autonomous vehicle;
   the camera housing comprises a glass positioned in front of the array of cameras;
   the glass is coated with a set of materials comprising a hydrophobic material and an anti-reflective material;
   the set of materials is configured to reduce ghosting effect on an image captured by one of the array of cameras, wherein the ghosting effect corresponds to a replica of a light source in the image that is offset in position with respect to the light source;
   the camera housing further comprises a top portion and a bottom portion;
   the glass is coupled to the top portion and the bottom portion;
   the top portion extends beyond the bottom portion to form a tilt angle; and
   the tilt angle is configured to reduce indirect light from coming into fields of view of the array of cameras;
a control device associated with the autonomous vehicle and comprising at least one processor configured to at least:
   receive the image from the one of the array of cameras; and
   facilitate autonomous driving of the autonomous vehicle using at least the image, wherein:
      the ghosting effect is reduced in the image due to using the set of materials; and
      the autonomous driving of the autonomous vehicle is improved in response to a reduction of the ghosting effect in the image.

Clause 9. The system of Clause 8, wherein the tilt angle is about between 15 and 25 degrees.

Clause 10. The system of Clause 8, wherein the glass is formed from a material comprising borosilicate.

Clause 11. The system of Clause 8, wherein at least one of the set of materials is coated on an outside surface of the glass.

Clause 12. The system of Clause 8, wherein at least one of the set of materials is coated on an inside surface of the glass.

Clause 13. The system of Clause 8, wherein the array of cameras are positioned to face at least a portion of a road ahead of the autonomous vehicle.

Clause 14. The system of Clause 8, wherein the array of cameras are positioned to face at least a portion of a road behind the autonomous vehicle.

Clause 15. A camera housing comprising:
a glass;
a top portion; and
a bottom portion, wherein:
   the camera housing is configured to house a camera;
   the glass is positioned in front of the camera;
   the glass is coated with a set of materials comprising a hydrophobic material and an anti-reflective material;
   the set of materials is configured to reduce ghosting effect on an image captured by the camera;
   the ghosting effect corresponds to a replica of a light source in the image that is offset in position with respect to the light source;
   the top portion extends beyond the bottom portion to form a tilt angle; and
   the tilt angle is configured to reduce indirect light received by the camera.

Clause 16. The camera housing of Clause 15, wherein the tilt angle is between 15 and 25 degrees.

Clause 17. The camera housing of Clause 15, wherein the glass is formed from a material comprising borosilicate.

Clause 18. The camera housing of Clause 15, wherein at least one of the set of materials is coated on an outside surface of the glass.

Clause 19. The camera housing of Clause 15, wherein at least one of the set of materials is coated on an inside surface of the glass.

Clause 20. The camera housing of Clause 15, wherein the glass is coupled to the top portion and the bottom portion.

## Claims

1. A camera housing comprising:
a glass;
a top portion; and
a bottom portion, wherein:
the camera housing is configured to house at least one camera;
the glass is positioned in front of the at least one camera;
the glass is coated with a set of materials comprising a hydrophobic material and an anti-reflective material;
the set of materials is configured to reduce ghosting effect on an image captured by the at least one camera;
the ghosting effect corresponds to a replica of a light source in the image that is offset in position with respect to the light source;
the top portion extends beyond the bottom portion to form a tilt angle; and
the tilt angle is configured to reduce indirect light received by the at least one camera.

2. The camera housing of claim 1, wherein the tilt angle is between 15 and 25 degrees.

3. The camera housing of claim 1 or 2, wherein the glass is formed from a material comprising borosilicate.

4. The camera housing of any preceding claim, wherein at least one of the set of materials is coated on an outside surface of the glass.

5. The camera housing of any preceding claim, wherein at least one of the set of materials is coated on an inside surface of the glass.

6. The camera housing of any preceding claim, wherein the glass is coupled to the top portion and the bottom portion.

7. The camera housing of any preceding claim, wherein the tilt angle is configured to reduce indirect light from coming into a field of view of the camera.

8. The camera housing of any preceding claim, wherein the at least one camera comprises an array of cameras.

9. The camera housing of claim 8, wherein the set of materials is configured to reduce ghosting effect on an image captured by a camera of the array of cameras.

10. The camera housing of any preceding claim, wherein the set of materials comprises an anti-reflective material.

11. The camera housing of claim 10, wherein the anti-reflective material comprises one of: an index matching coating, a single-layer interference coating, a multi-layer interference coating, an absorbing anti-reflective coating, a moth-eye coating, or a circular polarizer.

12. The camera housing of any preceding claim, wherein the set of materials comprises a first coating material and a second coating material.

13. A system comprising:
the camera housing of any preceding claim, the camera housing being mounted to an autonomous vehicle; and
a control device associated with the autonomous vehicle and comprising at least one processor configured to at least:
receive the image from the at least one camera; and
facilitate autonomous driving of the autonomous vehicle using at least the image, wherein:
the ghosting effect is reduced in the image due to using the set of materials.

14. The system of claim 13, wherein the at least one camera is positioned to face at least a portion of a road ahead of the autonomous vehicle.

15. The system of claim 13, wherein the at least one camera is positioned to face at least a portion of a road behind the autonomous vehicle.
